# EUROPEAN PATENT APPLICATION

(11) **EP 2 524 797 A1**
(43) Date of publication of application: **21.11.2012**
(21) Application number: 12168767.7
(22) Date of filing: 21.05.2012
(51) Int. Cl.: B29C 70/54, B32B 3/26, B29C 70/22

(54) **Multi-ply laminate composite materials having apertures defined therein**

(30) Priority: 19.05.2011 US 201113111939
(71) Applicant: Szasz, Paul, Toronto, ON M4W 1S9 (CA); MacDonald, Bruce, Mississauga, ON L5L 2R3 (CA); Xiao, Wei Charles, Toronto, ON M4A 2J9 (CA)
(72) Inventor: Szasz, Paul, Toronto, ON M4W 1S9 (CA); MacDonald, Bruce, Mississauga, ON L5L 2R3 (CA); Xiao, Wei Charles, Toronto, ON M4A 2J9 (CA)
(74) Representative: Crease, Devanand John

(57) **Abstract**

Multi-ply laminate composite components of non-planar shape can be formed with apertures defined therein, instead of cutting the apertures after forming the multi-ply laminate composite component. This is achieved by cutting apertures in the individual plies before the plies are assembled and consolidated, with the aperture or apertures in each ply, or in each set of plies, positioned to accommodate the local distance differential between adjacent plies, or sets of plies, so that the resulting component aperture or apertures will achieve a desired alignment. Removable pins can be used to maintain the plies in alignment during the consolidation process, and fittings such as annular collars can be secured in the component apertures during consolidation.

## Description

### Field of the Invention

The present invention is directed to multi-ply laminate composite materials, and more particularly to multi-ply laminate composite materials having apertures defined therein.

### BACKGROUND OF THE INVENTION

Multi-ply laminate composite components can be formed by assembling a plurality of plies into a laminate structure of superposed plies, with each ply comprising a layer of reinforcing fibers impregnated with a binding matrix, and then consolidating the laminate structure, typically by application of heat and pressure, so that plies are fused together by the binding matrix to form the multi-ply laminate composite component.

Multi-ply laminate composite components are generally formed without apertures, and any required apertures are typically drilled or cut into the multi-ply laminate composite component at a later stage of production. This requires additional processing after drilling or cutting to smooth and seal the edges of the apertures, which will typically have rough edges as a result of the drilling or cutting operation.

### SUMMARY OF THE INVENTION

The present invention enables multi-ply laminate composite components of non-planar shape to be formed with apertures defined therein, instead of cutting the apertures after forming the multi-ply laminate composite component. This is achieved by cutting apertures in the individual plies before the plies are assembled and consolidated, with the aperture or apertures in each ply, or in each set of plies, positioned to accommodate the local distance differential between adjacent plies, or sets of plies, so that the resulting component apertures will achieve a desired alignment.

In one aspect, the present invention is directed to a method for constructing a multi-ply laminate composite component having at least one component aperture therein. The method comprises assembling a plurality of plies into a laminate structure of superposed plies, with the laminate structure having a non-planar shape and each ply comprising a layer of reinforcing fibers impregnated with a binding matrix. The plurality of plies includes at least one group of plies each having at least one ply aperture therethrough, and the plies are arranged so that the ply apertures in each group of plies entirely overlap the corresponding ply apertures in each adjacent ply in the group. The method further comprises consolidating the laminate structure into the multi-ply laminate composite component, which has a non-planar shape corresponding to the non-planar shape of the laminate structure, so that the overlapping ply apertures become the at least one component aperture.

In one embodiment, the non-planar shape of the multi-ply laminate composite component comprises a plurality of non-parallel planar regions, with at least two of the non-parallel planar regions having at least one respective component aperture therein, and at least one component aperture in each of the at least two of the non-parallel planar regions is oriented to be substantially longitudinally perpendicular to a plane defined by the respective planar region.

In one embodiment, the non-planar shape of the multi-ply laminate composite component comprises at least one curved region. At least one of the component apertures is disposed in the curved region, and at least one component aperture in the curved region is oriented to be substantially longitudinally perpendicular to a tangent of a surface of the curved region taken at the position of the respective component aperture.

In one embodiment of the method, before arranging the plurality of plies into the laminate structure of superposed plies, the at least one ply aperture is cut in each ply. The laminate structure comprises a plurality of ply sets each having a predetermined designated position in the laminate structure, and, for each ply set in the laminate structure, each ply aperture is offset, relative to the corresponding ply aperture in each adjacent ply set in the laminate structure and measured in a planar configuration of each ply set, to accommodate a local distance differential between adjacent ply sets. The local distance differential results from the non-planar shape of the laminate structure. Each ply set may consist of a plurality of individual plies, or each ply set may consist of a single ply, or the ply sets may comprise some ply sets each consisting of a single ply and other ply sets each consisting of a plurality of individual plies.

In one embodiment, the perimeter dimensions of each ply set differ, measured in a planar configuration of each ply set, to result in a desired predetermined edge shape of the multi-ply laminate composite component.

Optionally, after consolidating the laminate structure into the multi-ply laminate composite component, at least one edge of the multi-ply laminate composite component may be trimmed.

In one embodiment of the method, assembling the plurality of plies into the laminate structure comprises placing a removable pin in at least one group of corresponding ply apertures in the laminate structure before consolidating the laminate structure into the multi-ply laminate composite component, and the method further comprises removing the removable pins from the composite component. In another embodiment of the method, assembling the plurality of plies into the laminate structure comprises placing an annular collar in at least one group of corresponding ply apertures in the laminate structure before consolidating the laminate structure, so that each annular collar is sealed to the binding matrix during consolidation to form part of the composite component.

In another aspect, the present invention is directed to a method for constructing a multi-ply laminate composite component having at least one component aperture therethrough. The method comprises assembling a plurality of plies into a laminate structure of superposed plies, with the laminate structure having a non-planar shape and each ply comprising a layer of reinforcing fibers impregnated with a binding matrix and having at least one ply aperture therethrough. The plies are arranged so that the ply apertures in each ply overlap the corresponding ply apertures in each adjacent ply, and the method further comprises consolidating the laminate structure into the multi-ply laminate composite component. The method is **characterized in that** assembling the plurality of plies into the laminate structure comprises placing an annular collar in at least one group of corresponding ply apertures in the laminate structure before consolidating the laminate structure so that each annular collar is sealed to the binding matrix during consolidation to form part of the composite component.

In a further aspect, the present invention is directed to a multi-ply laminate composite component. The multi-ply laminate composite component comprises a laminate structure of superposed plies, with each ply comprising a layer of reinforcing fibers and the plies consolidated together in a solid binding matrix, characterized by polystrate fibers extending across adjacent plies in an annular region surrounding at least one aperture defined through the composite component.

### DESCRIPTION OF THE DRAWINGS

In order that the subject matter may be readily understood, embodiments are illustrated by way of examples in the accompanying drawings, in which:

Figure 1 is a perspective view of a first exemplary multi-ply laminate composite component constructed according to an aspect of the present invention;

Figure 2 is a flow chart showing an exemplary method for constructing a multi-ply laminate composite component having at least one component aperture therein, according to an aspect of the present invention;

Figure 3A shows a plurality individual plies;

Figure 3B shows the plies of Figure 3A having ply apertures cut therein, according to an aspect of the present invention;

Figure 3C is a schematic side cross-sectional view showing a first exemplary laminate structure formed from the plies of Figure 3B;

Figure 3D is a schematic side cross-sectional view showing a second exemplary laminate structure formed from the plies of Figure 3B;

Figure 3E is a schematic side cross-sectional view showing a third exemplary laminate structure formed from the plies of Figure 3B;

Figure 3F is a schematic side cross-sectional view showing a fourth exemplary laminate structure formed from the plies of Figure 3B;

Figure 3G is a schematic side cross-sectional view showing a fifth exemplary laminate structure formed from the plies of Figure 3B;

Figure 3H is a schematic side cross-sectional view showing a sixth exemplary laminate structure formed from the plies of Figure 3B;

Figure 4 is a schematic side cross-sectional illustration showing formation of a laminate composite component in the absence of offsets for adjacent ply apertures;

Figure 5 is a schematic side cross-sectional view showing a first stage of assembling a laminate structure from a plurality of the plies of Figure 3B, according to an aspect of the present invention;

Figure 6 is a schematic side cross-sectional view showing a second stage of assembling a laminate structure from a plurality of the plies of Figure 3B, according to an aspect of the present invention;

Figure 7 is a schematic side cross-sectional view showing a third stage of assembling a laminate structure from a plurality of the plies of Figure 3B, with both halves of a mold in position, according to an aspect of the present invention;

Figure 8 is a schematic side cross-sectional view showing consolidation of the laminate structure of Figure 7 within the mold of Figure 7;

Figure 9A is a detailed view of a portion of Figure 8, showing a portion of a component aperture and a portion of a removable pin;

Figures 9B and 9C are detailed views of portions of Figure 8, showing portions of component apertures including annular collars and portions of the mold of Figure 7;

Figures 10A to 10G show various outer perimeter shapes for annular collars and/or removable pins;

Figure 11A is a schematic side cross-sectional view showing a portion of a second exemplary multi-ply laminate composite component according to an aspect of the present invention, with a bolt received in a component aperture thereof;

Figure 11B is a schematic side cross-sectional view showing a portion of a third exemplary multi-ply laminate composite component according to an aspect of the present invention; and

Figure 12 is a schematic side cross-sectional view showing a mold and removable pin arrangement for forming the multi-ply laminate composite component of Figure 11A.

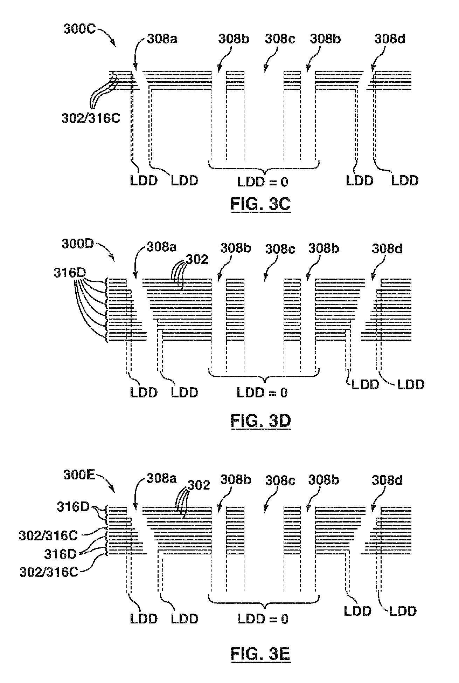

For ease of illustration, Figures 3C to 8 and Figures 11A to 12 are schematic side cross-sectional views in which the ply apertures and component apertures are denoted by white space, rather than actual cross-sectional views showing the interior walls of the ply apertures and component apertures, because the nature of the multi-ply laminate structures shown inhibits effective illustration of the positions of the ply apertures and component apertures by actual cross-sectional views.

### DETAILED DESCRIPTION

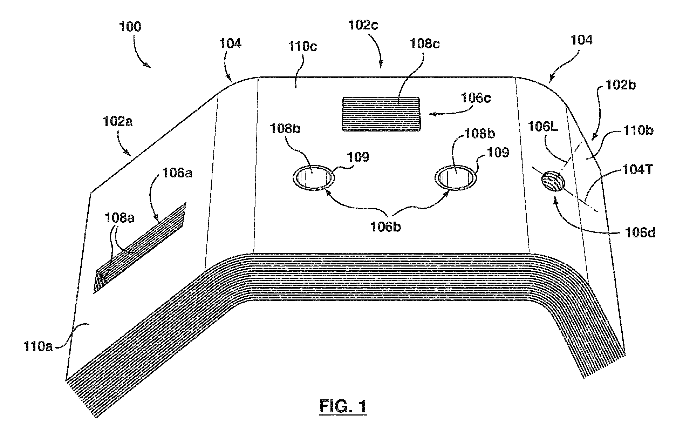

Reference is now made to Figure 1, which shows an exemplary multi-ply laminate composite component 100 manufactured according to an aspect of the present invention. The multi-ply laminate composite component 100 has a non-planar shape, which in the illustrated embodiment comprises three distinct planar regions, namely two peripheral planar regions 102a, 102b and a central planar region 102c, with each peripheral planar region 102a, 102b separated from the central planar region 102c by curved regions 104. Each planar region 102a, 102b, 102c is non-parallel to the next adjacent planar region 102a, 102b, 102c; in the illustrated embodiment the two peripheral planar regions 102a, 102b are non-parallel to the central planar region 102c and are also non-parallel to one another. The multi-ply laminate composite component 100 has a plurality of component apertures 106a, 106b, 106c, 106d defined therethrough. A rectangular component aperture 106a is defined through one of the peripheral planar regions 102a. Two circular component apertures 106b, reinforced by respective annular collars 109 embedded in the multi-ply laminate composite component 100, are defined through the central planar region 102c, and a square component aperture 106c is also defined through the central planar region 102c. A circular component aperture 106d is defined through one of the curved regions 104. The respective walls 108a, 108b, 108c of the component apertures 106a, 106b, 106c are substantially perpendicular to the surfaces 110a, 110b, 110c of the respective planar regions 102a, 102b, 102c. The walls of 108b of the circular component apertures 106b through the central planar region 102c are defined by the interior surfaces of their respective annular collars 109. The circular component aperture 106d in the curved region 104 is oriented so that its longitudinal axis 106L is substantially perpendicular to the tangent 104T of the surface of the curved region 104, taken at the position of that component aperture 106d.

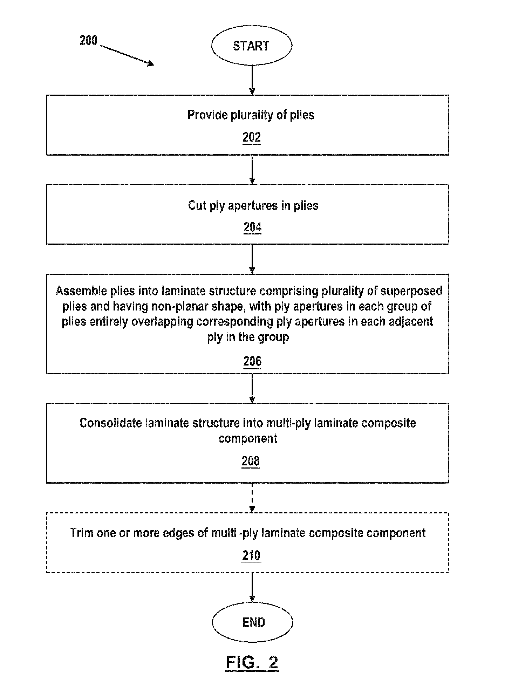

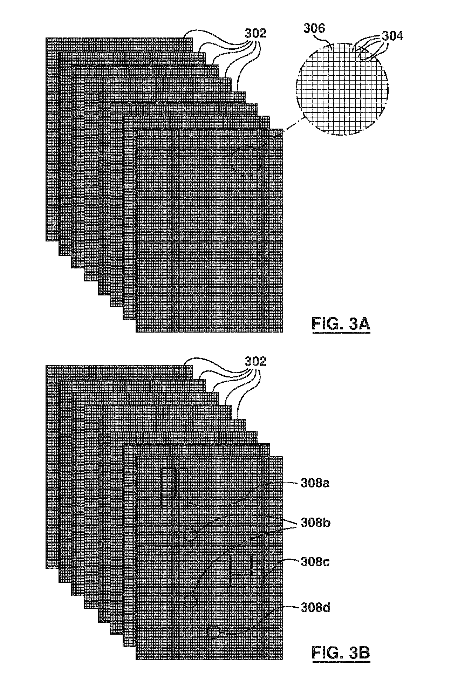

Reference is now made to Figure 2, which is a flow chart showing an exemplary method for constructing a multi-ply laminate composite component having a non-planar shape and having at least one component aperture therein. The method is indicated generally by the reference numeral 200. Reference is also made to Figures 3A to 8, which show schematic representations of the various steps of the method 200.

At step 202, and as shown in Figure 3A, a plurality of plies 302 are provided. Each ply 302 comprises a layer of reinforcing fibers 304 impregnated with a binding matrix 306. The fibers may be, for example, cellulose, glass, polymer such as polypropylene and polyethylene, aramid, carbon or boron fibers, and the binding matrix may be, for example, a thermoplastic, a polymer, an ionomer, a thermoset such as unsaturated polyester, epoxy, phenolics or cementatious materials. At step 204, and as shown in Figure 3B, ply apertures 308a, 308b, 308c and 308d are cut in each ply 302. The plies 302 will eventually form the multi-ply laminate composite component 100, and the ply apertures 308a, 308b, 308c and 308d correspond to, and will become, the component apertures 106a, 106b, 106c and 106d in the multi-ply laminate composite component 100 shown in Figure 1.

As noted above, the multi-ply laminate composite component 100 has a non-planar shape. Since each ply 302 will occupy a different strata or position in the laminate structure 300C, 300D, 300E, 300F, 300G, 300H (see Figures 3C to 3H) that will form the multi-ply laminate composite component 100, cutting the ply aperture or apertures 308 to be identically positioned for each ply 302, as measured in a planar or flat configuration of the plies 302, would result in the individual ply apertures 308a, 308b, 308c and 308d in each ply 302 being out of alignment with one another when the laminate structure was assembled, so that the resulting component apertures would not be substantially perpendicular to the surfaces of the planar regions.

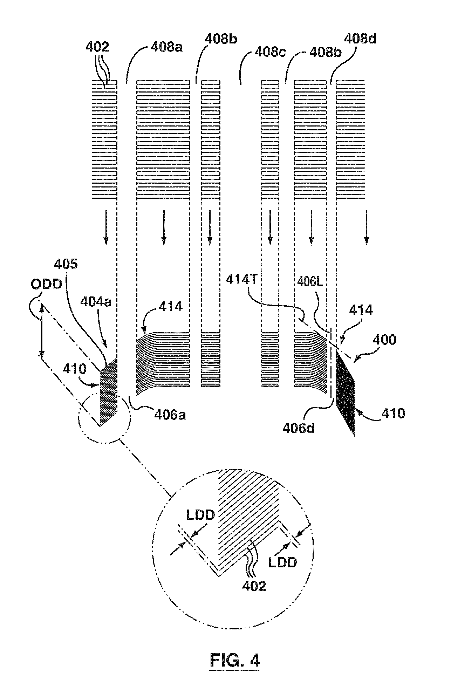

Figure 4 shows schematically the assembly of a multi-ply laminate composite component 400 from a plurality of plies 402 in which the ply apertures 408a, 408b, 408c and 408d are identically positioned for each ply 402, as measured in a planar or flat configuration of the plies 402. As can be seen in Figure 4, the non-planar shape of the multi-ply laminate composite component 400 will require the laminate structure to have at least one curve or bend, such as the curved regions 414, which will absorb more material for the plies 402 on the outside of the curved region 414 and less material for the plies 402 on the inside of the curved region 414. If the ply apertures 408a, 408b, 408c and 408d were identically positioned for each ply 402, as measured in a planar or flat configuration of the plies 402, when the plies 402 were assembled into a laminate structure and formed into the multi-ply laminate composite component 400, the ply apertures 408a, 408d disposed between the start of the curved region 414 and the outer edge 410 of the laminate structure 400 will be "pulled" by the curved region 414 more for each ply 402 positioned outwardly relative to the curved region 414 than for the next inwardly adjacent ply 402. Thus, there will be will be a local distance differential LDD between adjacent plies resulting from the non-planar shape of the laminate structure 400. While the local distance differential LDD between adjacent pairs of individual plies 402 will typically be negligible, the overall distance differential ODD between the outermost and innermost plies 402 can be significant enough that the resulting component aperture would be misaligned or malformed. For example, as shown in Figure 4, the component aperture 406a defined in the planar region 404a between the curved region 414 and the outer edge 410 of the multi-ply laminate composite component 400 is not substantially perpendicular to the surface 405 thereof, and the circular component aperture 406d disposed in the other curved region 414 does not have its longitudinal axis 406L substantially perpendicular to the tangent 414T of the surface of the other curved region 414, taken at the position of that component aperture 406d.

In order to obviate this issue, according to an aspect of the present invention, the laminate structure 300C, 300D, 300E, 300F, 300G, 300H (Figures 3C to 3H) that will be consolidated into the multi-ply laminate composite component 100 is formed from a plurality of individual ply sets 316C, 316D each having a predetermined designated position in the laminate structure 304. The ply apertures 308a, 308b, 308c, 308d are cut so that, for each ply set 316C, 316D in the laminate structure 300C, 300D, 300E, 300F, 300G, 300H, each ply aperture 308a, 308b, 308c, 308d is offset, relative to the corresponding ply aperture 308a, 308b, 308c, 308d in each adjacent ply set 316C, 316D in the laminate structure 300C, 300D, 300E, 300F, 300G, 300H, as measured in the planar configuration of each ply set 316C, 316D, to accommodate the local distance differential LDD between adjacent ply sets 316C, 316D. Calculation of the amount of offset, based on the shape and configuration of the particular multi-ply laminate composite component and the position of the particular ply set in the laminate structure, is within the capability of one skilled in the art, now informed by the herein disclosure, and the offset amounts may be programmed into a computer-numerically controlled (CNC) machine used to cut the plies.

Depending on the shape and configuration of the particular multi-ply laminate composite component, there may be ply apertures for which no offset is required. As can be seen in Figures 3C to 3H, the ply apertures 308b, 308c defined in the part of the plies 302 that will become the central planar region 102c are not offset between adjacent sets of plies 302, because their position will not be affected by the bending or curving in the completed multi-ply laminate composite component (see Figure 4). In other words, the local distance differential between adjacent ply sets 316C, 316D for the ply apertures 308b, 308c defined in the part of the plies 302 that will become the central planar region 102c is substantially zero, and hence those ply apertures 308b, 308c are offset by zero, that is, not offset.

In one embodiment, as shown in Figure 3B, each ply set 316B consists of a single ply 302 with the ply apertures 308a, 308d being cut in a different position for each ply 302 individually. In another embodiment, since the local distance differential LDD between adjacent pairs of plies 302 will typically be negligible, each ply set 316C may consist of a plurality of individual plies 302 with the ply apertures being cut in the same position for each ply 302 in the ply set 316C. In a further embodiment, the ply sets 316D may comprise some ply sets 316D each consisting of a single ply 302 and other ply sets 316D each consisting of a plurality of individual plies 302, as shown in Figure 3D. Where the ply sets 316C, 316D consist of multiple plies 302, the number of plies 302 in each ply set 316C, 316D must be sufficiently small, given the thickness of the plies 302, to avoid any significant local distance differential between plies 302 in a given ply set 316C, 316D.

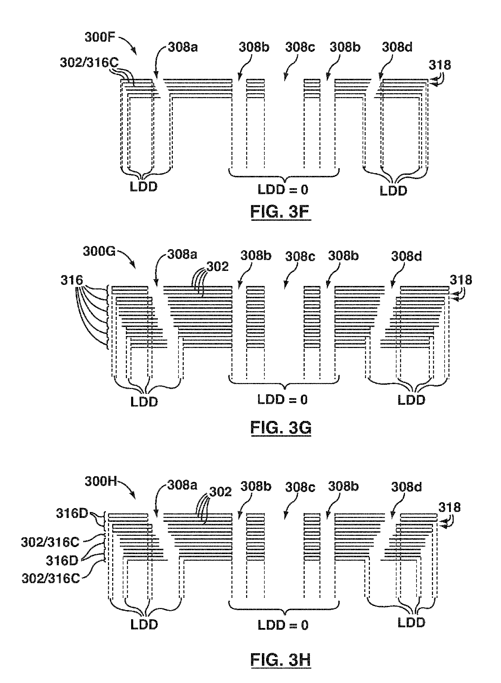

Where the non-planar shape of the multi-ply laminate composite component to be formed, such as the multi-ply laminate composite component 100 shown in Figure 1, comprises a plurality of non-parallel planar regions, such as regions 102a, 102b, 102c separated by one or more bends or curves, such as curved regions 104, the use of plies 302 of equal size will result in edges that are non-perpendicular to the surface of the adjacent planar region, which may be undesirable. This effect is shown in Figure 4. To obviate this effect, the perimeter dimensions of each ply set 316C, 316D, as measured in the planar configuration, may be varied to accommodate the local distance differential LDD resulting from the non-planar shape of the laminate structure 300C, 300D, 300E, 300F, 300G, 300H so that the laminate structure 300C, 300D, 300E, 300F, 300G, 300H will have a particular desired edge shape, such as perpendicular to the adjacent planar surface. As noted above, a curve or bend, such as curved regions 104, in the multi-ply laminate composite component will absorb more material for the plies 302 on the outside of the bend or curve and less material for the plies 302 on the inside of the bend or curve. Therefore, an edge that is perpendicular to the adjacent planar surface can be provided by having the corresponding edge or edges 318 of each ply set 316C, 316D extend beyond the edge or edges 318 of the next inwardly adjacent ply set 316C, 316D. This is illustrated in Figures 3F, 3G and 3H, which are identical to Figures 3C, 3D and 3E, respectively, except that the respective edge or edges 318 of each ply set 316C, 316D are outwardly offset, relative to the corresponding edge 318 of the next inwardly adjacent ply set 316C, 316D in the laminate structure 300C, 300D, 300E, 300F, 300G, 300H, as measured in the planar configuration of each ply set 316C, 316D, to accommodate the local distance differential LDD between adjacent ply sets 316C, 316D. Alternatively or additionally, after consolidating the laminate structure 300C, 300D, 300E, 300F, 300G, 300H into the multi-ply laminate composite component 100, one or more edges of the multi-ply laminate composite component 100 may be trimmed to achieve the desired edge shape.

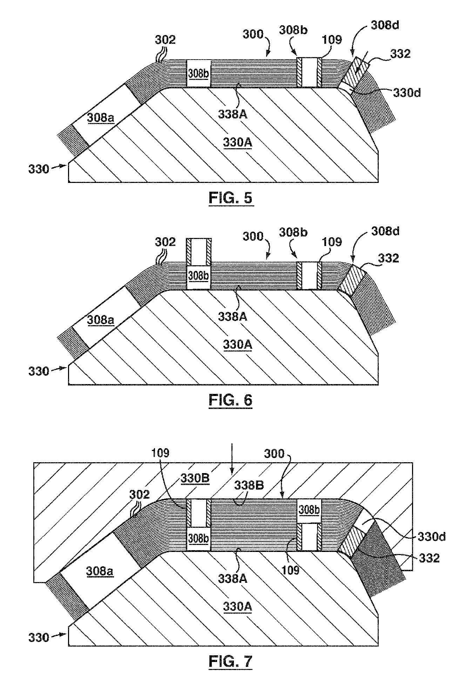

Returning now to Figure 2, at step 206 the plies 302 are assembled into a laminate structure comprising a plurality of superposed plies 302 and having a non-planar shape. As shown in Figure 5,the plies 302 are assembled onto a lower portion 330A of a heated mold 330, which, in combination with the upper portion 330B, will define the shape of the finished multi-ply laminate composite component 100. As can be seen, the mold 330 has a non-planar shape. In the particular embodiment shown in Figure 5, the laminate structure is one in which the corresponding edge or edges of each ply set extend beyond the edge or edges of the next inwardly adjacent ply set in (in the planar configuration) to produce edges perpendicular to the respective adjacent planar surface, and therefore may be any one of the laminate structures 300F, 300G, 300H shown in Figures 3F to 3H, respectively. In Figure 5 and subsequent figures, the laminate structure is denoted generally by the reference 300.

As can be seen in Figure 5, the plies 302, and hence the laminate structure 300, assume a non-planar shape defined by the lower mold portion 330A. In the illustrated embodiment, the component apertures 106a, 106b, 106c, 106d extend through the entire thickness of the multi-ply laminate composite component 100, and hence the plies 302 comprise a single group of plies 302 each having a plurality of ply apertures defined therethrough. The plies 302 are arranged so that with the laminate structure 300 in the non-planar shape defined by the lower mold portion 330A, the ply apertures 308a, 308b, 308d in each ply 302 entirely overlap the corresponding ply apertures 308a, 308b, 308d in each adjacent ply 302. The ply apertures that will form the square component aperture 106c through the central planar region 102c of the multi-ply laminate composite component 100 are not visible in Figures 5 to 8.

Shifting of the plies during consolidation thereof can disrupt the desired shape of the final component apertures. To inhibit such shifting, removable or permanent placeholders may be positioned to extend through a plurality of plies, in particular through one or more ply apertures thereof. As shown in Figures 5 to 7, as part of the step 206 (Figure 2) of assembling the plies 302 into the laminate structure 300, annular collars 109 are placed in the ply apertures 308b that will form the reinforced circular component apertures 106b in the central planar region 102c of the multi-ply laminate composite component 100; the annular collars 109 will be sealed to the binding matrix during consolidation to form part of the composite component 100. As shown in Figures 6 and 7, one of the annular collars 109 extends through the upper group of plies 302 while the other annular collar 109 extends through the lower group of plies 302, with some overlap such that there is an intermediate group of plies 302 through which both annular collars 109 extend. This intermediate group of plies comprises the uppermost plies in the lower group of plies and the lowermost plies in the upper group of plies. The annular collars 109 may be secured to opposite faces of the mold 330. As can be seen in Figures 5 to 7, before consolidation the laminate structure 300 formed by the plies 302 is taller than the annular collars 109; if both annular collars extended only through the upper group of plies 302 or only through the lower group of plies 302, the other group of plies 302 could shift during consolidation. The overlapping structure shown in Figure 7, with the placement of the annular collars 109 alternating between overlapping upper and lower groups of plies 302, will anchor all of the plies 302 in place during the consolidation process.

In addition, also as part of the step 206 (Figure 2) of assembling the plies 302 into the laminate structure 300, a removable pin 332 is placed in the circular ply aperture 308d that will become the circular component aperture 106d in the curved region 104 of the of the multi-ply laminate composite component 100, as shown in Figures 5 to 7. The pin 332 is removably secured to the lower portion 330A of the mold 330, and is removed from the resulting circular component aperture 106d after consolidation and the pin 332 is made from a suitable material for this purpose.

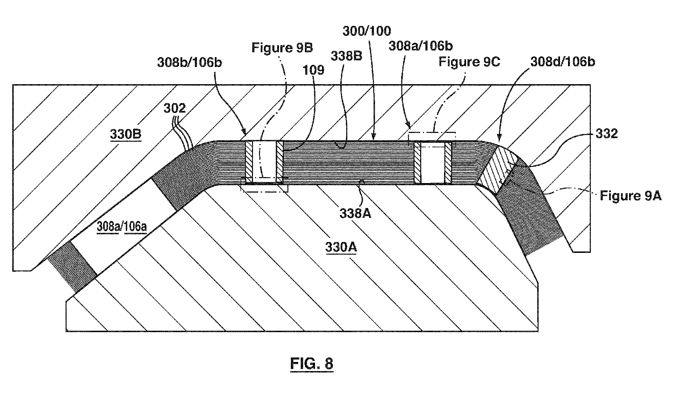

Referring again to Figure 2, at step 208 the laminate structure 300 is consolidated into the multi-ply laminate composite component 100. As shown in Figure 8, in the illustrated embodiment consolidation is achieved by closing the upper and lower mold portions 330B, 330A to apply pressure and heat to the laminate structure 300, which melts the binding matrix 306 (Figure 3A) in the individual plies and fuses the plies together to form the multi-ply laminate composite component 100 which, as shown in Figure 1, has a non-planar shape corresponding to the non-planar shape of the laminate structure 300 (Figures 5 to 7), with the overlapping ply apertures 308a, 308b, 308c, 308d (Figures 5 to 7) becoming the component apertures 106a, 106b, 106c, 106d. The removable pin 332 is then removed from the component aperture 106d in which it had been disposed, while the annular collars remain part of the completed multi-ply laminate composite component 100.

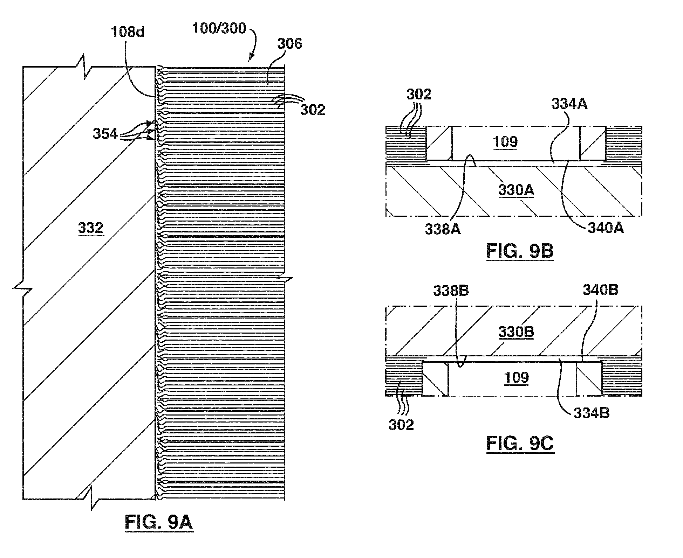

As shown in Figures 9B and 9C, the length of the annular collars 109 is slightly less than the distance between the opposed faces 338A, 338B of the mold portions 330A, 330B when the mold 330 is closed. This results in a small gap 334B between the inner face 338B of the upper portion 330B of the mold 330 and the upper surface 340B of the annular collar 109 that was positioned to extend through the lower group of plies 302 (Figure 7). Similarly, there is also a small gap 334A between the inner face 338A of the lower portion 330A of the mold 330 and the lower surface 340A of the annular collar 109 that was positioned to extend through the upper group of plies 302 (Figure 7). The thickness of the gaps 334A, 334B is on the order of a few plies. A similar gap (not shown) is defined between the upper end of the removable pin 332 and the inner face 338B of the upper portion 330B of the mold 330. The gaps 334A, 334B enable the mold portions 330A, 330B to apply pressure only to the laminate structure 300 and not to the annular collars 109 and removable pin 332, as the annular collars 109 and removable pin 332 will typically be made of a material that could resist the pressure applied by the mold 330 and prevent proper compression of the laminate structure 300.

It will be noted here that the ply apertures 308a corresponding to the rectangular component aperture 106a defined through the peripheral planar region 102a, and ply apertures corresponding to the square component aperture 106c defined through the central planar region 102c, do not receive any anchoring devices such as the annular collars 109 or the pin 332. Because the annular collars 109 anchor all of the plies 302 in place, alignment of the ply apertures 308a corresponding to the rectangular component aperture 106a will be maintained during consolidation, even in the absence of an anchor dedicated to those ply apertures 308a. As such, in the illustrated embodiment the removable pin 332 may optionally be omitted. Alternatively, placeholders of suitable shape may be placed in the ply apertures 308a corresponding to the rectangular component aperture 106a defined through the peripheral planar region 102a, and in the ply apertures corresponding to the square component aperture 106c defined through the central planar region 102c.

One skilled in the art, now informed by the herein disclosure, will appreciate that where annular collars are not required in a finished multi-ply laminate composite component, removable pins similar to the removable pin 332 may be used instead of the annular collars 109 to implement an overlapping structure such as that shown in Figure 7, with the placement of the removable pins alternating between overlapping upper and lower groups of plies to anchor the plies during the consolidation process. The use of removable pins assists in forming and maintaining a uniform component aperture from the ply apertures during consolidation, and also assists in providing a substantially fiber-free interior surface for the resulting component aperture.

Referring again to Figure 2, at optional step 210 one or more edges of the multi-ply laminate composite component 100 can optionally be trimmed to provide a desired edge shape.

Reference is now made to Figure 9A, which shows a detailed cross-sectional view of a portion of the multi-ply laminate composite component 100 adjacent the circular component aperture 106d in the curved region 104 of the of the multi-ply laminate composite component 100, with the removable pin 332 still in place. As can be seen, the finished multi-ply laminate composite component 100 comprises a laminate structure 300 of superposed plies 302 each comprising a layer of reinforcing fibers, with the plies 302 consolidated together in a solid binding matrix 306. As a result of the use of the removable pin 332, the inner wall 108d of the circular component aperture 106d is substantially completely sealed by the binding matrix 306, with few or no fibers from the plies 302 protruding into the circular component aperture 106d. Thus, the circular component aperture 106d has a substantially fiber-free inner wall 108d. In addition, the use of the removable pin 332 in combination with the heat and pressure applied by the mold 330 has resulted in polystrate fibers 354 extending across adjacent plies 302 in the annular region surrounding the circular component aperture 106d.

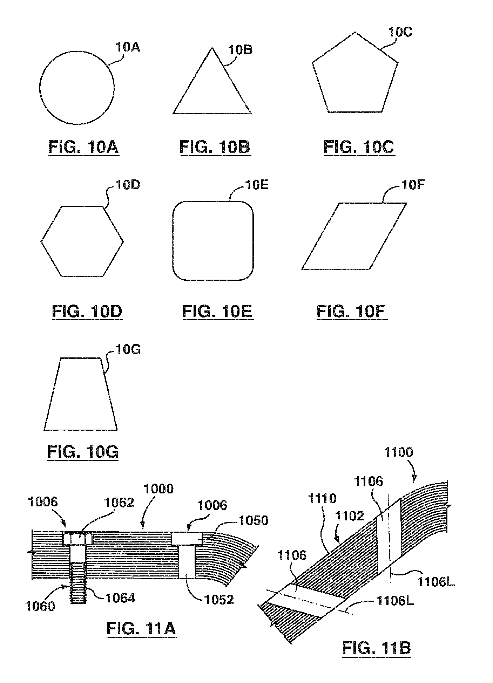

Component apertures in multi-ply laminate composite components constructed according to aspects of the present invention can have a wide variety of perimeter shapes. For example, component apertures may have a circular perimeter 10A as shown in Figure 10A, a triangular perimeter 10B as shown in Figure 10B, a pentagonal perimeter 10C as shown in Figure 10C, a hexagonal perimeter 10D as shown in Figure 10D, a square perimeter 10E with rounded corners as shown in Figure 10E, a parallelogram perimeter 10F as shown in Figure 10F, a trapezoidal perimeter 10G as shown in Figure 10G, or any other suitable perimeter shape.

Multi-ply laminate composite components constructed according to aspects of the present invention can have component apertures of non-constant perimeter shape or non-constant diameter. For example, as shown in Figure 11A, an exemplary multi-ply laminate composite component 1000 has circular component apertures 1006 each having a first portion 1050 opening at one side of the multi-ply laminate composite component 1000 and a second portion 1052 opening at the opposite side of the multi-ply laminate composite component 1000. The first portion 1050 of the component aperture 1006 is of substantially larger diameter than the second portion 1052 thereof, defining an annular shoulder therebetween. The circular component apertures 1006 are suitable for receiving a bolt 1060, with the first portion 1050 of the component aperture 1006 serving as a countersink to receive the head 1062 of the bolt 1060 while the second portion 1052 of the component aperture 1006 receives the shaft 1064 of the bolt 1060. Component apertures of non-constant perimeter shape or non-constant diameter, such as the component apertures 1006 shown in Figure 11A, can be formed by using annular collars or removable pins of different sizes and shapes.

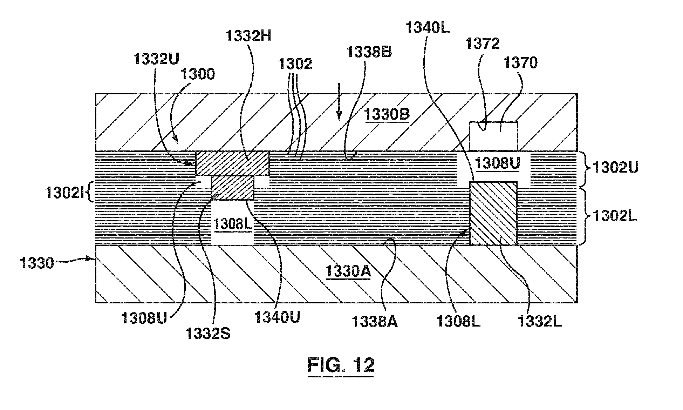

As shown in Figure 12, a laminate structure 1300 comprises a plurality of individual plies 1302. A lower group of plies 1302L has ply apertures 1308L sized to receive the shaft of a bolt (not shown in Figure 12), and an upper group of plies 1302U has ply apertures 1308U sized to receive the head of the bolt. A head-side removable pin 1332U comprises a cylindrical head portion 1332H corresponding in size to the ply apertures 1308U sized to receive the head of the bolt and a smaller cylindrical shaft portion 1332S corresponding in size to the ply apertures 1308L sized to receive the shaft of the bolt, with the cylindrical head portion 1332H and the cylindrical shaft portion 1332S arranged coaxially. A shaft-side removable pin 1332L is generally cylindrical and corresponds in size to the ply apertures 1308L sized to receive the shaft of the bolt. The head-side removable pin 1332U is received in the ply apertures 1308U in the upper group of plies 1302U, with the shaft portion 1332S of the head-side removable pin 1332U extending downwardly beyond the upper group of plies 1302U into the ply apertures 1308L in the lower group of plies 1302L. The shaft-side removable pin 1332L is received in the ply apertures 1308L in the lower group of plies 1302L and extends upwardly beyond the lower group of plies 1302L into the ply apertures 1308U in the upper group of plies 1302U. As such, there is an intermediate group of plies 1302I, comprising the uppermost plies in the lower group of plies 1302L and the lowermost plies in the upper group of plies 1302U, through which both the head-side removable pin 1332U and the shaft-side removable pin 1332L extend. This overlapping structure will anchor all of the plies 1302 in place during the consolidation process. Since the shaft-side removable pin 1332L is longer than the distance between the opposed mold faces 1338A, 1338B of the lower and upper portions 1330A, 1330B of the mold 1330, a recess 1370 is defined in the face 1338B of the upper mold portion 1330B to receive the upper end of the shaft-side removable pin 1332L so that when the mold 1330 is closed, the upper surface 1340L of the shaft-side removable pin 1332L will be spaced from the upper surface 1372 of the recess 1370 in the face 1338B of the upper mold portion 1330B. Similarly, the length of the head-side removable pin 1332U is such that the lower surface 1340U of the head-side removable pin 1332U is spaced from the face 1338A of the lower mold portion 1330A when the mold 1330 is closed. Optionally, the head-side removable pin 1332U and the shaft-side removable pin 1332L may be secured to opposite faces 1338A, 1338B of the mold 1330.

As shown in Figure 11B, by appropriate positioning and alignment of individual ply apertures, a multi-ply laminate composite component 1100 can be formed having planar regions 1110 with component apertures 1106 defined therethrough wherein one or more longitudinal axes 1106L of the component apertures 1106 are non-perpendicular to the surface 1110 of the respective planar region.

Various embodiments have been described by way of example. It will be apparent to persons skilled in the art that a number of variations and modifications can be made without departing from the scope of the invention as defined in the claims. For example, while the component apertures illustrated herein have penetrated through the entire thickness of the respective multi-ply laminate composite component, other embodiments of the invention contemplate component apertures which extend only partially through the thickness of the respective multi-ply laminate composite component so as to define a recess or cavity therein. In such an embodiment, each ply will not necessarily have at least one ply aperture defined therethrough, and there may be some plies having no ply apertures. However, there will be at least one group of plies each having at least one ply aperture therethrough, and the plies will be arranged so that the ply apertures in each group of plies entirely overlap the corresponding ply apertures in each adjacent ply in the group, so as to form the desired component apertures when the laminate structure formed by the plies is consolidated.

The above description is intended in an illustrative rather than a restrictive sense. Variations to the exact embodiments described may be apparent to those skilled in the relevant art without departing from the spirit and scope of the claims set out below. It is intended that any such variations be deemed within the scope of this patent.

## Claims

1. A method for constructing a multi-ply laminate composite component having at least one component aperture therein, comprising:
assembling a plurality of plies into a laminate structure of superposed plies, the laminate structure having a non-planar shape;
each ply comprising a layer of reinforcing fibers impregnated with a binding matrix;
the plurality of plies including at least one group of plies each having at least one ply aperture therethrough;
the plies being arranged so that the ply apertures in each group of plies entirely overlap the corresponding ply apertures in each adjacent ply in the group; and
consolidating the laminate structure into the multi-ply laminate composite component, the multi-ply laminate composite component having a non-planar shape corresponding to the non-planar shape of the laminate structure, so that the overlapping ply apertures become the at least one component aperture.

2. The method of claim 1, wherein:
the non-planar shape of the multi-ply laminate composite component comprises a plurality of non-parallel planar regions;
at least two of the non-parallel planar regions having at least one respective component aperture therein;
at least one component aperture in each of the at least two of the non-parallel planar regions being oriented to be substantially longitudinally perpendicular to a plane defined by the respective planar region.

3. The method of any previous claim, wherein:
the non-planar shape of the multi-ply laminate composite component comprises at least one curved region;
at least one of the component apertures is disposed in the curved region; and
at least one component aperture in the curved region is oriented to be substantially longitudinally perpendicular to a tangent of a surface of the curved region taken at the position of the respective component aperture.

4. The method of any previous claim, further comprising:
before arranging the plurality of plies into the laminate structure of superposed plies, cutting the at least one ply aperture in each ply;
wherein the laminate structure comprises a plurality of ply sets each having a predetermined designated position in the laminate structure;
wherein, for each ply set in the laminate structure, each ply aperture is offset, relative to the corresponding ply aperture in each adjacent ply set in the laminate structure and measured in a planar configuration of each ply set, to accommodate a local distance differential between adjacent ply sets, the local distance differential resulting from the non-planar shape of the laminate structure.

5. The method of claim 4, wherein each ply set consists of a plurality of individual plies.

6. The method of claim 4, wherein each ply set consists of a single ply.

7. The method of claim 4, wherein the ply sets comprise some ply sets each consisting of a single ply and other ply sets each consisting of a plurality of individual plies.

8. The method of any previous claim, wherein perimeter dimensions of each ply set differ, measured in a planar configuration of each ply set, to result in a desired predetermined edge shape of the multi-ply laminate composite component.

9. The method of any previous claim, further comprising:
after consolidating the laminate structure into the multi-ply laminate composite component, trimming at least one edge of the multi-ply laminate composite component.

10. The method of any previous claim, wherein:
assembling the plurality of plies into the laminate structure comprises placing a removable pin in at least one group of corresponding ply apertures in the laminate structure before consolidating the laminate structure into the multi-ply laminate composite component;
and wherein the method further comprises removing the removable pins from the composite component.

11. The method of any previous claim, wherein:
assembling the plurality of plies into the laminate structure comprises placing an annular collar in at least one group of corresponding ply apertures in the laminate structure before consolidating the laminate structure;
so that each annular collar is sealed to the binding matrix during consolidation to form part of the composite component.

12. A method for constructing a multi-ply laminate composite component having at least one component aperture therethrough, comprising:
assembling a plurality of plies into a laminate structure of superposed plies, the laminate structure having a non-planar shape;
each ply comprising a layer of reinforcing fibers impregnated with a binding matrix;
each ply having at least one ply aperture therethrough;
the plies being arranged so that the ply apertures in each ply overlap the corresponding ply apertures in each adjacent ply; and
consolidating the laminate structure into the multi-ply laminate composite component;
**characterized in that** assembling the plurality of plies into the laminate structure comprises placing an annular collar in at least one group of corresponding ply apertures in the laminate structure before consolidating the laminate structure so that each annular collar is sealed to the binding matrix during consolidation to form part of the composite component.

13. A multi-ply laminate composite component, comprising:
a laminate structure of superposed plies;
each ply comprising a layer of reinforcing fibers;
the plies consolidated together in a solid binding matrix;
**characterized by** polystrate fibers extending across adjacent plies in an annular region surrounding at least one aperture defined through the composite component.
